# EUROPÄISCHE PATENTSCHRIFT

(11) **EP 1 730 014 B1**
(45) Veröffentlichungstag und Bekanntmachung des Hinweises auf die Patenterteilung: **18.07.2007**
(21) Anmeldenummer: 05707590.5
(22) Anmeldetag: 23.02.2005
(51) Int. Cl.: B62D 13/06, B62D 15/02

(54) **STEUERUNGSSYSTEM FÜR EIN GESPANN**
CONTROL SYSTEM FOR A TRACTOR TRAILER
SYSTEME DE COMMANDE D'UN ATTELAGE MOTORISE

(30) Priorität: 25.02.2004 DE 102004009187
(43) Veröffentlichungstag der Anmeldung: 13.12.2006
(73) Patentinhaber: DaimlerChrysler AG, 70327 Stuttgart (DE)
(72) Erfinder: BAUER, Wolf-Dietrich, 70771 Leinfelden-Echterdingen (DE); MAYER, Christian, 72762 Reutlingen (DE); SCHWARZHAUPT, Andreas, 76829 Landau (DE); SPIEGELBERG, Gernot, 93077 Bad Abbach (DE)
(74) Vertreter: Eschbach, Arnold
(86) Internationale Anmeldenummer: PCT/EP2005/001870
(87) Internationale Veröffentlichungsnummer: WO 2005/080179

(56) Entgegenhaltungen:
- EP-A- 0 418 653
- DE-A1- 3 813 083
- DE-A1- 10 032 179
- DE-A1- 19 526 702
- DE-U1- 9 208 595

## Beschreibung

Die vorliegende Erfindung betrifft ein Steuerungssystem für ein Gespann aus einem Zugfahrzeug und einem Anhänger mit den Merkmalen des Oberbegriffs des Anspruchs 1.

Aus der DE 195 26 702 A1 ist für ein Gespann aus einem Zugfahrzeug und einem Anhänger zum Aufnehmen, Transportieren und Absetzen eines auf Stützen abstellbaren und mit einer Nutzlast beladbaren Gestells ein Steuerungssystem bekannt, das einen Bahnrechner aufweist, der zum Aufnehmen des Gestells eine den Anhänger rückwärts unter das Gestell führende Bahn berechnet. Hierzu arbeitet das bekannte Steuerungssystem mit einer am Heck des Anhängers angeordneten Kamera, welche bei einer entsprechenden Relativlage zwischen Gespann und Gestell das Gestell erkennt. Dabei wird eine Entfernung zwischen dem Gestell und dem Anhänger sowie ein Winkel zwischen einer Gestelllängsachse und einer Anhängerlängsachse bestimmt. Aus dieser Entfernung und diesem Winkel kann dann die Bahn berechnet werden, die beim Rückwärtsfahren den Anhänger unter das Gestell führt.

Beim bekannten Steuerungssystem bestimmt ein Zustandsregler aus der berechneten Bahn Bahnsollwerte und aus diesen zugehörige Lenkwinkelsollwerte. Mit einem entsprechenden Servomechanismus können dann die Lenkwinkel an einer Lenkanlage des Fahrzeugs automatisch eingestellt werden.

Mit Hilfe eines derartigen Steuerungssystems kann das Aufnehmen eines Gestells auf den Anhänger eines Gespanns erheblich vereinfacht werden, da das Rückwärtsfahren eines Gespanns aufgrund der komplexen Kinematik ohne ein derartiges Steuerungssystem einen erfahrenen Fahrzeugführer sowie regelmäßig einen Einweiser erfordert.

Aus der DE 100 32 179 A1 ist ein anderes Steuerungssystem bekannt, bei dem das Fahrzeug mit einem elektronisch ansteuerbaren Antriebsstrang ausgestattet ist. Dieser Antriebsstrang umfasst zumindest eine Lenkanlage, eine Bremsanlage und ein Antriebsaggregat. Derartige Steuerungssysteme für Fahrzeuge mit elektronisch ansteuerbarem Antriebsstrang werden auch als Drive-by-Wire-Systeme oder als X-by-Wire-Systeme bezeichnet. Bei solchen Systemen können Lenkanlage, Bremsanlage und Antriebsaggregat des Fahrzeugs elektronisch gesteuert werden, ohne dass zwischen entsprechenden Bedienelementen, wie Lenkrad, Bremspedal und Gaspedal, und der jeweiligen Antriebsstrang-Komponente eine durchgehende mechanische oder hydraulische Verbindung besteht. Das zugehörige Steuerungssystem umfasst eine fahrzeugfeste Bedieneinrichtung, in die ein Fahrzeugführer über entsprechende Bedienelemente, wie Lenkrad, Bremspedal, Gaspedal, einen Fahrwunsch eingibt und die aus dem Fahrwunsch einen standardisierten Bewegungsvektor generiert. Dieser Bewegungsvektor entspricht dabei beispielsweise einem Bus-Protokoll, insbesondere einem CAN-Protokoll. Diese Bedieneinrichtung bildet somit eine Eingabeebene für Vorgaben (Fahrwünsche), die vom Antriebsstrang abgearbeitet werden sollen. Des Weiteren ist dann auch eine Steuereinrichtung vorgesehen, die aus einem eingangsseitigen Bewegungsvekor ausgangsseitig Steuersignale zum Ansteuern des Antriebsstrangs generiert. Diese Steuersignale werden dann an den Antriebsstrang übermittelt und von diesem zur Umsetzung des Fahrwunsches abgearbeitet. Diese Steuereinrichtung bildet somit eine Koordinationsebene, die das Umsetzen der standardisierten Sollsignale (Fahrwunsch) am Antriebsstrang ermöglicht.

Die vorliegende Erfindung beschäftigt sich mit dem Problem, für ein Steuerungssystem der eingangs genannten Art eine andere Ausführungsform anzugeben, die insbesondere zuverlässig arbeitet und eine zusätzliche Funktionalität aufweisen kann.

Erfindungsgemäß wird dieses Problem durch den Gegenstand des unabhängigen Anspruchs gelöst. Vorteilhafte Ausführungsformen sind Gegenstand der abhängigen Anspruche.

Die vorliegende Erfindung beruht auf dem allgemeinen Gedanken, aus Istwerten für Position und Lage des Gestells Sollwerte für Position und Lage des Anhängers zu ermitteln, um durch einen Vergleich der Sollwerte und Istwerte zur Lage und Position des Anhängers die erforderliche Bahn zu berechnen, die es ermöglicht, den Anhänger von seiner Istposition und Istlage in die berechnete Sollposition und Solllage zu überführen, in der sich dann der Anhänger unterhalb des Gestells befindet und dieses aufnehmen kann.

Über die Genauigkeit, mit welcher die Istwerte von Lage und Position für den Anhänger und für das Gestell bereitgestellt bzw. in das Steuerungssystem eingelesen werden können, kann eine ordnungsgemäße Funktionsweise des Steuerungssystems und somit des Aufnahmevorgangs für das Gestell verbessert werden. Das erfindungsgemäße Steuerungssystem ist grundsätzlich unabhängig von der optischen Güte und Justierung einer Kamera oder von aktuellen Sichtverhältnissen.

Besonders vorteilhaft ist eine Weiterbildung, bei welcher die Istwerte für Position und Lage des Gestells elektronisch in einem Speicher des Gestells auslesbar gespeichert sind, wobei eine erste Eingabeeinrichtung, über die eine Istposition und eine Istlage des Gestells in den Bahnrechner eingebbar sind, oder ein Zentralspeicher eines Speditionshofs oder Logistikzentrums mit diesem Gestellspeicher zur Datenübertragung verbindbar ist. Auf diese Weise sind die benötigten Istwerte für Position und Lage des Gestells dem jeweiligen Gestell exakt zugeordnet. Die elektronische oder digitale Speicherung der benötigten Gestell-Istwerte vermeidet bei einer entsprechenden elektronischen Datenübertragung Eingabefehler, was die Funktionssicherheit des Steuerungssystems erhöht. Des Weiteren können die Istwerte quasi mit einer beliebig hohen Genauigkeit abgespeichert werden, was ebenfalls die Funktionsfähigkeit des Steuerungssystems verbessert.

Gemäß einer Weiterbildung kann der Gestellspeicher am Gestell fest angeordnet sein, wobei dann die erste Eingabeeinrichtung und/oder der Zentralspeicher mit dem Gestellspeicher zu einer telemetrischen Datenübertragung verbindbar sind. Hierbei handelt es sich um eine besonders komfortable Lösung, die eine besonders einfache und zuverlässige Datenübertragung zwischen dem Gestellspeicher und dem Bahnrechner ermöglicht. Alternativ kann der Gestellspeicher auch am Gestell entfernbar angeordnet sein, wobei dann die erste Eingabeeinrichtung und/oder der Zentralspeicher mit einer geeigneten Schnittstelle ausgestattet ist, über die der Gestellspeicher zur Datenübertragung mit der ersten Eingabeeinrichtung bzw. mit dem Zentralspeicher verbindbar ist. Bei dieser preiswerteren Ausführungsform kann ebenfalls eine zuverlässige und sichere Datenübertragung erreicht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte Draufsicht auf ein Gespann beim Aufnehmen eines Gestells,
- Fig. 2: eine schaltplanartige Prinzipdarstellung des erfindungsgemäßen Steuerungssystems.

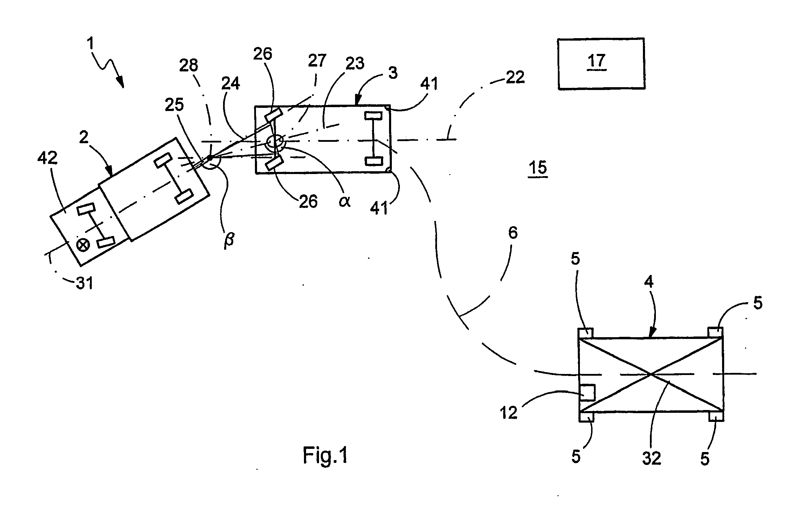

Entsprechend Fig. 1 besitzt ein Gespann 1 ein Zugfahrzeug 2 sowie einen Anhänger 3, der zum Aufnehmen, zum Transportieren und zum Absetzen eines Gestells 4 ausgebildet ist, ein derartiges Gestell 4 weist Stützen 5 auf, auf denen es abstellbar ist, und kann mit einer Nutzlast 32, z. B. ein Container, beladen werden.

Zum Abstellen des Gestells 4 werden die Stützen 5 ausgefahren und das Gestell 4 relativ zum Anhänger 3 angehoben. Ebenso ist es grundsätzlich möglich, den Anhänger 3 relativ zum Gestell 4 abzusenken. Anschließend kann der Anhänger 3 unter dem Gestell 4 weggefahren werden. Zum Aufnehmen des Gestells 4 muss der Anhänger 3 demnach wieder rückwärts unter das Gestell 4 verfahren werden. Hierzu muss der Anhänger 3 eine geeignete, hier durch eine unterbrochene Linie angedeutete Bahn 6 rückwärts durchfahren, was bei einem solchen Gespann 1 aufgrund der vorherrschenden komplexen Kinematik manuell nur recht schwer realisierbar und in der Regel sehr zeitaufwendig ist und außerdem einen Einweiser erfordern kann.

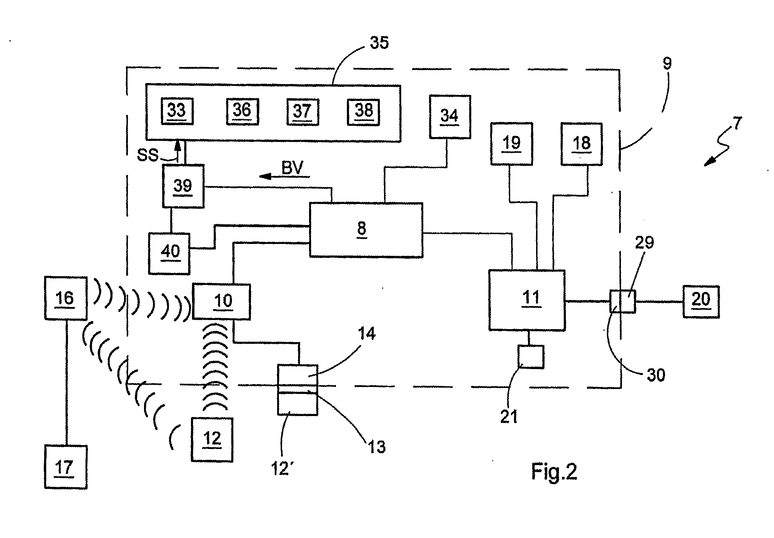

Entsprechend den Fig. 1 und 2 umfasst ein erfindungsgemäßes Steuerungssystem 7 einen fahrzeugfesten Bahnrechner 8, mit dessen Hilfe die zuvor genannte Bahn 6 berechnet werden kann. Die fahrzeugfesten Komponenten des Steuerungssystems 7 sind hier in einem mit unterbrochener Linie gezeichneten und mit 9 bezeichneten Rahmen angeordnet. Demnach umfasst das Steuerungssystem 7 außerdem eine fahrzeugfeste erste Eingabeeinrichtung 10, die so ausgestaltet ist, dass darüber eine Istposition und eine Istlage des Gestells 4 in den Bahnrechner 8 eingebbar sind. Des Weiteren ist eine ebenfalls fahrzeugfeste zweite Eingabeeinrichtung 11 vorgesehen, die so ausgestaltet ist, dass darüber eine Istposition und eine Istlage des Anhängers 3 in den Bahnrechner 8 eingebbar sind.

Im vorliegenden Zusammenhang wird zwischen den Begriffen "Lage" und "Position" unterschieden. Zum einen bestimmt die "Position" des Zugfahrzeugs 2, des Anhängers 3 bzw. des Gestells 4 die Relativlage eines vorbestimmten Referenzpunktes des Zugfahrzeugs 2, des Anhängers 3 bzw. des Gestells 4 innerhalb eines geostationären Bezugs-Koordinatensystems, das in der Regel mit Längen- und Breitenkoordinaten aufgespannt ist. Im Unterschied dazu bezeichnet der Begriff "Lage" die Orientierung einer Längsachse des Zugfahrzeugs 2, des Anhängers 3 bzw. des Gestells 4 innerhalb des jeweiligen Bezugs-Koordinatensystems. Beispielsweise können zur Beschreibung der Lage die Himmelsrichtungen genutzt werden.

Erfindungsgemäß ist nun der Bahnrechner 8 so ausgestaltet, dass er zunächst aus der Istposition und der Istlage des Gestells 4 eine Sollposition und eine Solllage für den Anhänger 3 berechnet, wobei diese Sollwerte für Position und Lage des Anhängers 3 so gewählt sind, dass sich dann der Anhänger 3 zum Aufnehmen des Gestells 4 in einer dafür geeigneten Relativlage unter dem Gestell 4 befindet.

Der Bahnrechner 8 ist außerdem so programmiert bzw. ausgestattet, dass er anschließend aus den Istwerten und den Sollwerten für Position und Lage des Anhängers 3 die zuvor genannte Bahn 6 berechnen kann, die den Anhänger 3 beim Rückwärtsfahren des Gespanns 1 unter das Gestell 4 führt.

Gemäß einer besonders vorteilhaften Ausführungsform weist das Gestell 4 einen Speicher oder Gestellspeicher 12 auf. In diesem Gestellspeicher 12 sind die benötigten Istwerte für die Position und Lage des Gestells 4 elektronisch so gespeichert, dass diese Daten bedarfsabhängig aus dem Gestellspeicher 12 auslesbar sind. Die erste Eingabeeinrichtung 10 kann nun auf geeignete Weise mit diesem Gestellspeicher 12 so verbunden werden, dass eine Datenübertragung stattfinden kann. So können die Istwerte für Position und Lage des Gestells 4 vom Gestellspeicher 12 über die erste Eingabeeinrichtung 10 zum Bahnrechner 8 gelangen. Bevorzugt ist hierbei eine Ausführungsform, bei welcher die Datenübertragung zwischen Gestellspeicher 12 und erster Eingabeeinrichtung 10 telemetrisch arbeitet. Bei einer derartigen Ausführungsform ist der Gestellspeicher 12 fest am Gestell 4 angebracht. Je nach Ausgestaltung des Gestellspeichers 12 benötigt dieser für die telemetrische Datenübertragung keine eigene Spannungsversorgung. Es ist klar, dass für die telemetrische Datenübertragung eine hier nicht näher gezeigte, geeignete Sender-EmpfängerAnordnung vorgesehen ist, welche die drahtlose Datenübertragung zwischen dem Gestellspeicher 12 und der ersten Eingabeeinrichtung 10 ermöglicht.

Zusätzlich oder alternativ kann es auch vorgesehen sein, den Gestellspeicher 12 so am Gestell 4 anzubringen, dass er davon abnehmbar bzw. entfernbar ist. Der entfernbare Gestellspeicher, im folgenden mit 12' bezeichnet, besitzt dann eine entsprechende Schnittstelle 13 und kann mit einer komplementären Schnittstelle 14 kontaktiert werden, die fahrzeugfest angeordnet ist und mit der ersten Eingabeeinrichtung 10 verbunden ist.

Darüber hinaus ist es grundsätzlich auch möglich, den gestellfesten Gestellspeicher 12 über eine entsprechende Verbindungsleitung an die erste Eingabeeinrichtung 10 anzuschließen. Eine derartige Leitung kann beispielsweise die Schnittstellen 13 und 14 miteinander verbinden und dadurch eine drahtgebundene Datenübertragung ermöglichen.

Das Gestell 4 kann gemäß Fig. 1 beispielsweise auf einem Gelände 15 eines im übrigen nicht dargestellten Speditionshofs oder Logistikzentrums abgestellt sein. Gemäß Fig. 2 kann dieses Logistikzentrum einen Zentralspeicher 16 aufweisen, der ebenfalls zur Datenübertragung mit dem Gestellspeicher 12 verbindbar ist. Auch hier ist grundsätzlich eine telemetrische Datenübertragung sowie eine Verbindung über einen Steckplatz oder über eine drahtgebundene Verbindung möglich.

Im Zentralspeicher 16 sind dann zweckmäßig die Istpositionen und Istlagen für sämtliche Gestelle 4 abgelegt, die sich momentan auf dem Gelände 15 des Speditionshofs befinden. Bei einer Weiterbildung kann nun die erste Eingabeeinrichtung 10 die Istwerte für Lage und Position des jeweils aufzunehmenden Gestells 4 direkt vom Zentralspeicher 16 erhalten, wobei auch hier eine telemetrische Datenübertragung denkbar ist. Alternativ kann auch hier eine drahtgebundene Datenübertragung stattfinden.

Dabei kann es zweckmäßig sein, im Gestellspeicher 12 zusätzliche Informationen, wie z. B. Ladegutinformationen, zu speichern. Derartige Ladegutinformationen, wie z. B. Art der Ladung, Ziel der Ladung und Liefertermin für die Ladung, können zum einen für das Logistikzentrum von Bedeutung sein. Zum anderen können sie auch für den Fahrzeugführer des Gespanns 1 von Interesse sein. Denkbar ist beispielsweise eine Kopplung eines fahrzeuginternen Navigationssystems, derart, dass dessen Zieleingabe automatisch den Zielort der Ladung übernimmt und daraus die Fahrtroute für das Gespann 1 berechnet.

Zur Bestimmung der Istposition des Gestells 4 kann das Gestell 4 beispielsweise mit einer satellitengestützten Positionsbestimmungseinrichtung ausgestattet sein. Zur Bestimmung seiner Istlage kann das Gestell 4 beispielsweise mit einem auslesbaren Kompass ausgestattet sein. Diese Lagebestimmungseinrichtung und die Positionsbestimmungseinrichtung können dann die Istwerte für Lage und Position in den Gestellspeicher 12 einlesen. Alternativ dazu kann der jeweilige Speditionshof mit einer zentralen Positions- und Lagebestimmungseinrichtung 17 ausgestattet sein, die es ermöglicht, für jedes Gestell 4, das sich auf dem Gelände 15 des Speditionshofs befindet, die aktuelle Lage und Position zu ermitteln. Beispielsweise kann eine derartige Lage- und Positionsbestimmungseinrichtung mit Kameras und/oder mit Radar und/oder mit Sonar arbeiten. Sobald das jeweilige Gestell 4 auf dem Gelände 15 abgestellt ist, kann die Positions- und Lagebestimmungseinrichtung 17 die jeweilige Lage und Position des Gestells 4 ermitteln und die zugehörigen Istwerte dem Zentralspeicher 16 übermitteln.

Die zweite Eingabeeinrichtung 11 kann mit einer satellitengestützten Navigationseinrichtung 18 sowie mit wenigstens einem auslesbaren Kompass 19 verbunden sein. Die Navigationseinrichtung 18, in der Regel ein GPS, sowie der auslesbare Kompass 19 sind dabei fahrzeugfest, insbesondere zugfahrzeugfest angeordnet. Bei einem anhängerfesten Kompass 19 kann die Istlage des Anhängers 3 besonders einfach in Abhängigkeit der Istposition des Zugfahrzeugs 2 bei einem zugfahrzeugfesten Navigationssystem 18 aus der Geometrie des Anhängers 3 und des Zugfahrzeugs 2 ermittelt werden. Einfacher gestaltet sich die Positionsbestimmung des Anhängers 3 jedoch durch ein anhängerfestes Navigationssystem 18. Da dies jedoch relativ aufwendig ist und das Zugfahrzeug 2 in der Regel sowieso mit einem zugfahrzeugfesten Navigationssystem 18 sowie mit einem zugfahrzeugfesten Kompass 19 ausgestattet ist, arbeitet die zweite Eingabeeinrichtung 11 vorzugsweise mit einem Knickwinkelsensor 20 und/oder mit einem Deichselwinkelsensor 21.

Bezugnehmend auf Fig. 1 kann mit Hilfe des Knickwinkelsensors 20 ein Knickwinkel α bestimmt werden, der sich zwischen einer Anhängerlängsachse 22 und einer Deichsellängsachse 23 aufspannt. Der Anhänger 3 ist hier über eine Deichsel 24 mit einer Anhängerkupplung 25 des Zugfahrzeugs 2 verbunden. Die Deichsel 24 dient zur Lenkbetätigung lenkbarer Räder 26 des Anhängers 3. Die Deichsellängsachse 23 erstreckt sich durch eine Drehachse 27 zwischen Deichsel 24 und Anhänger 3 und durch eine Drehachse 28 zwischen Deichsel 24 und Anhängerkupplung 25. Der Knickwinkelsensor 20 ist dabei vorzugsweise am Anhänger 3 angebracht und kann über entsprechende Schnittstellen 29 und 30 mit der zweiten Eingabeeinrichtung 11 des Zugfahrzeugs 2 kommunizieren. Im Unterschied dazu dient der Deichselwinkelsensor 21 zum Messen eines Deichselwinkels β, der sich zwischen der Deichsellängsachse 23 und einer Zugfahrzeuglängsachse 31 aufspannt. Zweckmäßig ist der Deichselwinkelsensor 21 am Zugfahrzeug 2 installiert, was die datenübertragende Kopplung mit der zweiten Eingabeeinrichtung 11 vereinfacht.

Bei einem als Auflieger ausgestalteten Anhänger 3 kann auf einen der Winkelsensoren 20, 21 verzichtet werden, da ein derartiger Auflieger keine Deichsel aufweist, so dass der Knickwinkel dort zwischen der Anhängerlängsachse 22 und der Zugfahrzeuglängsachse 31 direkt gemessen werden kann.

Entsprechendes gilt dann auch für einen Anhänger, der mit einer Starrdeichsel fest verbunden ist und nur eine Achse aufweist, die beispielsweise auch eine Doppelachse oder Zwillingsachse sein kann. Auch bei einem derartigen Anhänger 3 muss nur ein Sensor zur Bestimmung des Winkels zwischen Anhängerlängsachse 22 und Zugfahrzeuglängsachse 31 vorgesehen werden.

Der Bahnrechner 8 kann somit über die Daten des Navigationssystems 18, des Kompass 19 und der Winkelsensoren 20, 21 aus der Istlage und Istposition des Zugfahrzeugs 2 die Istlage und Istposition des Anhängers 3 ermitteln.

Bei einer besonders vorteilhaften Ausführungsform kann der Bahnrechner 8 beim Abstellen des Gestells 4 die ihm bekannten Istwerte für Lage und Position des Anhängers 3 in Istwerte für Lage und Position des Gestells 4 transformieren. In der Regel werden sich diese Istwerte etwa entsprechen, so dass diese Transformation relativ einfach ist. Des Weiteren kann der Bahnrechner 8 so eingestellt sein, dass er die ermittelten Istwerte für Lage und Position des Gestells 4 beim Abstellvorgang, z. B. beim oder nach dem Ausfahren der Stützen 5 in den Gestellspeicher 12 einliest.

Wenn bei einer anderen Ausführungsform der Speditionshof mit der Positions- und Lagebestimmungseinrichtung 17 ausgestattet ist, kann auch diese die Istwerte für Lage und Position des Zugfahrzeugs 2 und/oder des Anhängers 3 ermitteln und bereitstellen. Die zweite Eingabeeinrichtung 11 kann die so bereitgestellten Istwerte z. B. am Zentralrechner 16 drahtgebunden oder drahtlos abrufen. Bei einer derartigen Ausführungsform benötigt das Gespann 1 keine eigene Navigationseinrichtung 18 bzw. keinen eigenen Kompass 19.

Der Bahnrechner 8 generiert die Bahn 6 zweckmäßig so, dass diese aus einer Abfolge von Bewegungsvektoren BV besteht. Diese Bewegungsvektoren BV umfassen zumindest einen Lenkbefehl für eine Lenkanlage 33 des Zugfahrzeugs 2. Der Bahnrechner 8 ermittelt diese Lenkbefehle dabei so, dass der Anhänger 3 beim Rückwärtsfahren des Gespanns 1 und bei Befolgung der genannten Lenkbefehle der Bahn 6 folgt und somit unter das Gestell 4 fährt.

Bei einer einfachen Ausführungsform kann das erfindungsgemäße Steuerungssystem 7 eine Anzeigeeinrichtung 34 aufweisen, die in einem Cockpit 42 des Fahrzeugs angeordnet ist. Diese Anzeigeeinrichtung 34 ist so ausgestaltet, dass sie dem Fahrzeugführer den aktuellen Lenkbefehl des Bewegungsvektors BV optisch und/oder akustisch anzeigt. Der Fahrzeugführer muss dann beim Rückwärtsfahren nur die angezeigten Lenkbefehle befolgen, um den Anhänger 3 seines Gespanns 1 problemlos unter das Gestell 4 zu fahren. Diese Variante des Steuerungssystems 7 kann insbesondere auch nachträglich in ein herkömmliches Fahrzeug eingebaut werden.

Ein modernes Zugfahrzeug 2 kann mit einem elektronisch ansteuerbaren Antriebsstrang 35 ausgestattet sein. Dieser Antriebsstrang 35 umfasst zumindest eine elektronisch betätigbare Lenkanlage 33. Beim hier gezeigten Ausführungsbeispiel umfasst der Antriebsstrang 35 außerdem eine elektronisch betätigbare Bremsanlage 36 sowie ein elektronisch betätigbares Antriebsaggregat 37. Des Weiteren kann auch ein elektronisch betätigbares Getriebe 38 vorgesehen sein.

Darüber hinaus umfasst ein derartiges Zugfahrzeug 2 eine Steuereinrichtung 39 zur Betätigung des Antriebsstrangs 35 bzw. der Komponenten dieses Antriebsstrangs 35. Die Steuereinrichtung 39 ist dabei so ausgestaltet, dass sie eingangsseitige Bewegungsvektoren BV ausgangsseitig in Steuersignale SS transformiert und mit diesen den Antriebsstrang 35 ansteuert. Der Antriebsstrang 35 kann nun diese Steuersignale SS abarbeiten, d. h. die Komponenten des Antriebsstrangs 35 werden durch die Steuersignale SS betätigt. Bei einem Aufsetzvorgang bedeutet dies, dass die Lenkanlage 33 die erforderlichen Lenkbefehle automatisch ausführt.

Zusätzlich kann vorgesehen sein, dass das Einfahren der Stützen 5 am Ende des Aufnahmevorgangs automatisch vom Bahnrechner 8 oder von der Steuereinrichtung 39 durchgeführt wird.

Sofern die vom Bahnrechner 8 generierten Bewegungsvektoren BV neben den Lenkbefehlen außerdem Bremsbefehle und Beschleunigungsbefehle bzw. Geschwindigkeitsbefehle umfassen, kann auch ein autonomer Betrieb des Gespanns 1 realisiert werden, bei welchem das Rückwärtsfahren des Gespanns 1 zum Aufnehmen des Gestells 4 automatisch abläuft. Hierzu wird vorab das Gespann 1 in einer geeigneten Weise relativ zum Gestell 4 positioniert und in einen speziellen Betriebsmodus gebracht, der ein automatisches Aufnehmen des Gestells 4 ermöglicht. Im Rahmen dieses Betriebsmodus werden dann die Istwerte für Lage und Position des Gestells 4 sowie des Anhängers 3 ermittelt und über die Eingabeeinrichtungen 10 und 11 dem Bahnrechner 8 mitgeteilt. Der Bahnrechner 8 bestimmt daraus zum einen die Sollwerte für Lage und Position des Anhängers 3 und daraus die Bahn 6, welche die erforderlichen Bewegungsvektoren BV enthält.

Gemäß einer besonders vorteilhaften Ausführungsform kann der Anhänger 3 zusätzlich mit einer Abstandssensorik 40 ausgestattet sein, die einen oder mehrere Abstandssensoren 41 umfasst. Diese Abstandssensorik 40 überwacht nun die unmittelbare Umgebung des Anhängers 3 und kann beim Annähern des Anhängers 3 an das Gestell 4 Abstandswerte ermitteln. Diese Abstandswerte können zum einen vom Bahnrechner 8 zum Abgleich der Istwerte für Lage und Position des Anhängers 3 und des Gestells 4 genutzt werden. Der Bahnrechner 8 kann daher mit Hilfe der Abstandswerte permanent die Bahn 6 korrigieren. Auf diese Weise kann zumindest im Nahbereich die Funktionsweise des Steuerungssystems verbessert werden. Zusätzlich oder alternativ kann vorgesehen sein, dass der Bahnrechner 8 und/oder die Steuereinheit 39 aus den aktuellen Abstandswerten das Vorliegen einer Kollisionsgefahr überwachen kann bzw. können. Bei Vorliegen einer akuten Kollisionsgefahr können nun der Bahnrechner 8 und/oder die Steuereinrichtung 39 einen vorrangigen Bremsbefehl generieren, der das Zugfahrzeug 2 rechtzeitig zum Stillstand bringt. Dieser Not-Bremsbefehl geht dabei sämtlichen Befehlen der Bewegungsvektoren BV der Bahn 6 vor.

## Patentansprüche

1. Steuerungssystem für ein Gespann (1) aus einem Zugfahrzeug (2) und einem Anhänger (3) zum Aufnehmen, Transportieren und Absetzen eines auf Stützen (5) abstellbaren und mit einer Nutzlast(32) beladbaren Gestells (4), wobei ein Bahnrechner (8) vorgesehen ist, der zum Aufnehmen des Gestells (4) eine den Anhänger (3) rückwärts unter das Gestell (4) führende Bahn (6) berechnet,
**dadurch gekennzeichnet,**
- **dass** eine erste Eingabeeinrichtung (10) vorgesehen ist, über die eine Istposition und eine Istlage des Gestells (4) in den Bahnrechner (8) eingebbar sind,
- **dass** eine zweite Eingabeeinrichtung (11) vorgesehen ist, über die eine Istposition und eine Istlage des Anhängers (3) in den Bahnrechner (8) eingebbar sind,
- **dass** der Bahnrechner (8) so ausgestaltet ist, dass er aus der Istposition und der Istlage des Gestells (4) eine Sollposition und eine Solllage für den Anhänger (3) berechnet, bei welcher sich der Anhänger (3) zum Aufnehmen des Gestells (4) unter diesem befindet, und dass er aus den Istwerten und den Sollwerten von Position und Lage des Anhängers (3) die den Anhänger (3) rückwärts unter das Gestell (4) führende Bahn (6) berechnet.

2. Steuerungssystem nach Anspruch 1,
**dadurch gekennzeichnet,**
- **dass** die Istwerte für Position und Lage des Gestells (4) elektronisch in einem Speicher (12) des Gestells (4) auslesbar gespeichert sind,
- **dass** die erste Eingabeeinrichtung (10) und/oder ein Zentralspeicher (16) eines Speditionshofs oder Logistikzentrums mit diesem Gestellspeicher (12) zur Datenübertragung verbindbar ist.

3. Steuerungssystem nach Anspruch 2,
**dadurch gekennzeichnet,**
- **dass** der Gestellspeicher (12) am Gestell (4) fest angeordnet ist und dass die erste Eingabeeinrichtung (10) und/oder der Zentralspeicher (16) mit dem Gestellspeicher (12) zu einer telemetrischen Datenübertragung verbindbar ist, oder
- **dass** der Gestellspeicher (12) am Gestell (4) entfernbar angeordnet ist und dass die erste Eingabeeinrichtung (10) und/oder der Zentralspeicher (16) mit einer geeigneten Schnittstelle (14) ausgestattet ist, über die der Gestellspeicher (12) zur Datenübertragung mit der ersten Eingabeeinrichtung (10) und/oder mit dem Zentralspeicher (16) verbindbar ist.

4. Steuerungssystem nach Anspruch 2 oder 3,
**dadurch gekennzeichnet,**
- **dass** ein Speditionshof oder ein Logistikzentrum in seinem Zentralspeicher (16) die Istpositionen und Istlagen für sämtliche auf seinem Gelände (15) abgestellten Gestelle (4) enthält,
- **dass** die erste Eingabeeinrichtung (10) zum Einlesen der Istposition und der Istlage des aufzunehmenden Gestells (4) mit dem Zentralspeicher (16) zur Datenübertragung verbindbar ist.

5. Steuerungssystem nach einem der Ansprüche 2 bis 4,
**dadurch gekennzeichnet,**
**dass** im Gestellspeicher (12) außerdem Ladegutinformationen gespeichert sind.

6. Steuerungssystem nach einem der Ansprüche 2 bis 5,
**dadurch gekennzeichnet,**
**dass** der Bahnrechner (8) beim Abstellen des Gestells (4) aus der Istposition und der Istlage des Anhängers (3) die Istlage und Istposition des Gestells (4) berechnet und im Gestellspeicher (12) abspeichert.

7. Steuerungssystem nach einem der Ansprüche 1 bis 6,
**dadurch gekennzeichnet,**
- **dass** die zweite Eingabeeinrichtung (11) eine satellitengestützte Navigationseinrichtung (18) und wenigstens einen auslesbaren Kompass (19) aufweist und mit deren Hilfe die Istposition und die Istlage des Anhängers (3) ermittelt, und/oder
- **dass** ein Speditionshof oder Logistikzentrum eine Positions- und Lagebestimmungseinrichtung (17) aufweist, die Istwerte für die Lage und Position des Zugfahrzeugs (2) und/oder des Anhängers (3) ermittelt und zur Datenübertragung mit der zweiten Eingabeeinrichtung (11) drahtgebunden oder drahtlos verbindbar ist.

8. Steuerungssystem nach einem der Ansprüche 1 bis 7,
**dadurch gekennzeichnet,**
**dass** die zweite Eingabeeinrichtung (11) einen Deichselwinkelsensor (21) und/oder einen Knickwinkelsensor (20) aufweist und mit dessen bzw. deren Hilfe die Istposition und Istlage des Anhängers (3) ermittelt.

9. Steuerungssystem nach einem der Ansprüche 1 bis 8,
**dadurch gekennzeichnet,**
**dass** der Anhänger (3) als Auflieger oder als mit einer Lenkdeichsel (24) lenkbarer Anhänger (3) oder als mit einer Starrdeichsel fest verbundener Anhänger (3) ausgebildet ist.

10. Steuerungssystem nach einem der Ansprüche 1 bis 9,
**dadurch gekennzeichnet,**
- **dass** die Bahn (6) aus einer Abfolge von Bewegungsvektoren (BV) besteht, die jeweils wenigstens einen Lenkbefehl für eine Lenkanlage (33) des Zugfahrzeugs (2) aufweisen,
- **dass** der Bahnrechner (8) die Lenkbefehle so berechnet, dass der Anhänger (3) beim Rückwärtsfahren und bei Befolgung der Lenkbefehle unter das Gestell (4) fährt.

11. Steuerungssystem nach Anspruch 10,
**dadurch gekennzeichnet,**
**dass** in einem Cockpit (42) des Zugfahrzeugs (2) eine Anzeigeeinrichtung (34) vorgesehen ist, die dem Fahrzeugführer die Lenkbefehle optisch und/oder akustisch anzeigt.

12. Steuerungssystem nach Anspruch 10 oder 11,
**dadurch gekennzeichnet,**
- **dass** das Zugfahrzeug (2) einen elektronisch ansteuerbaren Antriebsstrang (35) aufweist, der zumindest eine elektronisch betätigbare Lenkanlage (33) umfasst,
- **dass** eine Steuereinrichtung (39) vorgesehen ist, die aus eingangsseitigen Bewegungsvektoren (BV) ausgangsseitig Steuersignale (SS) generiert und damit den Antriebsstrang (35) ansteuert, derart, dass beim Rückwärtsfahren zum Aufnehmen des Gestells (4) die Lenkanlage (33) automatisch die Lenkbefehle befolgt.

13. Steuerungssystem nach Anspruch 12,
**dadurch gekennzeichnet,**
- **dass** der Antriebsstrang (35) außerdem eine elektrisch betätigbare Bremsanlage (36) sowie ein elektrisch betätigbares Antriebsaggregat (37) umfasst,
- **dass** der Bewegungsvektor (BV) außerdem Bremsbefehle und Beschleunigungs- und/oder Geschwindigkeitsbefehle aufweist,
- **dass** die Steuersignale (SS) der Steuereinrichtung (39) den Antriebsstrang (35) so ansteuern, dass dieser das Rückwärtsfahren zum Aufnehmen des Gestells (4) automatisch durchführt.

14. Steuerungssystem nach einem der Ansprüche 1 bis 13,
**dadurch gekennzeichnet,**
**dass** der Anhänger (3) mit einer Abstandssensorik (40) ausgestattet ist, die beim Annähern des Anhängers (3) an das Gestell (4) Abstandswerte ermittelt, die vom Bahnrechner (8) zur Korrektur der Bahn (6) verwendbar sind und/oder die von der Steuereinrichtung (39) und/oder vom Bahnrechner (8) derart berücksichtigt werden, dass die Steuereinrichtung (39) und/oder der Bahnrechner (8) bei Vorliegen einer akuten Kollisionsgefahr einen vorrangigen Bremsbefehl generiert.

## Claims

1. A control system for a vehicle combination (1) composed of a towing vehicle (2) and a trailer (3) for picking up, transporting and setting down a frame (4) which can be positioned on supports (5) and have a payload (32) loaded onto it, wherein a path computer (8) is provided which calculates a path (6) which, in order to pick up the frame (4) calculates a path (6) which leads the trailer (3) backward under the frame (4), **characterized**
- **in that** a first input device (10) is provided, by means of which an actual position and an actual orientation of the frame (4) can be input into the path computer (8),
- **in that** a second input device (11) is provided by means of which an actual position and an actual orientation of the trailer (3) can be input into the path computer (8),
- **in that** the path computer (8) is configured in such a way that it calculates, from the actual position and the actual orientation of the frame (4), a reference position and a reference orientation for the trailer (3) in which the trailer (3) is located under the frame (4) in order to pick it up, and in that said path computer (8) calculates, from the actual values and the reference values of the position and orientation of the trailer (3), the path (6) which leads the trailer (3) backward under the frame (4).

2. The control system as claimed in claim 1, **characterized**
- **in that** the actual values for the position and orientation of the frame (4) are stored electronically in a memory (12) of the frame (4) in such a way that they can be read out,
- **in that** the first input device (10) and/or a central memory (16) of a dispatch center or logistics center can be connected to this frame memory (12) in order to transmit data.

3. The control system as claimed in claim 2, **characterized**
- **in that** the frame memory (12) is permanently arranged on the frame (4), and in that the first input device (10) and/or the central memory (16) can be connected to the frame memory (12) to form a telemetric data transmission means, or
- **in that** the frame memory (12) is arranged on the frame (4) in a removable fashion, and in that the first input device (10) and/or the central memory (16) are equipped with a suitable interface (14) via which the frame memory (12) can be connected to the first input device (10) and/or to the central memory (16) in order to transmit data.

4. The control system as claimed in claim 2 or 3, **characterized**
- **in that** a dispatch center or a logistics center contains, in its central memory (16), the actual positions and actual orientations for all the frames (4) positioned on its premises (15),
- **in that**, in order to read in the actual position and the actual orientation of the frame (4) to be picked up, the first input device (10) can be connected to the central memory (16) in order to transmit data.

5. The control system as claimed in one of claims 2 to 4, **characterized in that** freight information is also stored in the frame memory (12).

6. The control system as claimed in one of claims 2 to 5, **characterized in that**, when the frame (4) is set down, the path computer (8) calculates the actual orientation and actual position of the frame (4) from the actual position and the actual orientation of the trailer (3) and stores them in the frame memory (12).

7. The control system as claimed in one of claims 1 to 6, **characterized**
- **in that** the second input device (11) has a satellite-supported navigation device (18) and at least one compass (19) which can be read out and which is used to acquire the actual position and the actual orientation of the trailer (3), and/or
- **in that** a dispatch center or logistics center has a position and orientation determining device (17) which acquires actual values for the orientation and position of the towing vehicle (2) and/or of the trailer (3) and can be connected to the second input device (11) in a wire bound or wire free fashion in order to transmit data.

8. The control system as claimed in one of claims 1 to 7, **characterized in that** the second input device (11) has a shaft angle sensor (21) and/or a vending angle sensor (20) and uses them to determine the actual position and actual orientation of the trailer (3).

9. The control system as claimed in one of claims 1 to 8, **characterized in that** the trailer (3) is embodied as a semitrailer or as a trailer (3) which can be steered with a steering shaft (24) or as a trailer (3) which is permanently connected to a rigid shaft.

10. The control system as claimed in one of claims 1 to 9, **characterized**
- **in that** the path (6) is composed of a sequence of movement vectors (BV) which each have at least one steering instruction for a steering system (33) of the towing vehicle (2),
- **in that** the path computer (8) calculates the steering instructions in such a way that when the trailer (3) moves backward and follows the steering instructions it moves under the frame (4).

11. The control system as claimed in claim 10, **characterized in that** a display device (34) which indicates the steering instructions to the driver of the vehicle in a visual and/or audible fashion is provided in a cockpit (42) of a towing vehicle (2).

12. The control system as claimed in claim 10 or 11, **characterized**
- **in that** the towing vehicle (2) has a drive train (35) which can be actuated electronically and which comprises at least one steering system (33) which can be activated electronically,
- **in that** a control device (39) is provided which generates control signals (SS) at the output end from input-end movement vectors (BV) and thus actuates the drive train (35) in such a way that during reverse movement in order to pick up the frame (4) the steering system (33) follows the steering instructions automatically.

13. The control system as claimed in claim 12, **characterized**
- **in that** the drive train (35) also comprises a brake system (36) which can be activated electrically and a drive assembly (37) which can be activated electrically,
- **in that** the movement vector (BV) also has braking instructions and acceleration instructions and/or velocity instructions,
- **in that** the control signals (SS) of the control device (39) actuate the drive train (35) in such a way that it automatically implements the reverse movement in order to pick up the frame (4).

14. The control system as claimed in one of claims 1 to 13, **characterized in that** the trailer (3) is equipped with a distance sensor system (40) which, when the trailer (3) approaches the frame (4), determines distance values which can be used by the path computer (8) to correct the path (6) and/or which are taken into account by the control device (39) and/or by the path computer (8) in such a way that the control device (39) and/or the path computer (8) generates a prioritized braking instruction if an acute risk of collision is present.

## Revendications

1. Système de commande pour une pièce mère (1) composée d'un véhicule à traction (2) et d'une remorque (3) pour recevoir, transporter et déposer un châssis (4) pouvant être chargé avec une charge utile (32) et pouvant être placé sur des supports (5), moyennant quoi un calculateur de trajectoire (8) est prévu, lequel calcule une trajectoire (6) amenant la remorque (3) vers l'arrière sous le châssis (4) pour recevoir le châssis (4), **caractérisé en ce que**
■ un premier dispositif d'introduction (10) est prévu, via lequel une position réelle et une situation réelle du châssis (4) peuvent être introduites dans le calculateur de trajectoire (8),
■ un second dispositif d'introduction (11) est prévu, via lequel une position réelle et une situation réelle de la remorque (3) peuvent être introduites dans le calculateur de trajectoire (8),
■ le calculateur de trajectoire (8) est équipé, de sorte qu'il calcule une position théorique et une situation théorique pour la remorque (3) à partir de la position réelle et de la situation réelle du châssis (4), pour lesquelles la remorque (3) se situe en dessous de celui-ci pour recevoir le châssis (4), et **en ce qu'**il calcule la trajectoire (6) amenant la remorque (3) vers l'arrière sous le châssis (4) à partir des valeurs réelles et des valeurs théoriques de la position et de la situation de la remorque (3).

2. Système de commande selon la revendication 1, **caractérisé en ce que**
■ les valeurs réelles pour la position et la situation du châssis (4) sont enregistrées électroniquement de façon à être lues dans une mémoire (12) du châssis (4),
■ le premier dispositif d'introduction (10) et/ou une mémoire centrale (16) d'une société d'expédition ou d'un centre logistique peut être relié à cette mémoire du châssis (12) pour le transfert des données.

3. Système de commande selon la revendication 2, **caractérisé en ce que**
■ la mémoire du châssis (12) située au niveau du châssis (4) est disposée de façon fixe et **en ce que** le premier dispositif d'introduction (10) et/ou la mémoire centrale (16) peut être relié à une mémoire de châssis (12) pour le transfert télémétrique des données, ou
■ la mémoire du châssis (12) située au niveau du châssis (4) est disposée à distance et **en ce que** le premier dispositif d'introduction (10) et/ou la mémoire centrale (16) est pourvu d'une interface propre (14), via laquelle la mémoire du châssis (12) peut être reliée au premier dispositif d'introduction (10) pour le transfert des données et/ou à la mémoire centrale (16).

4. Système de commande selon la revendication 2 ou 3, **caractérisé en ce que**
■ une entreprise d'expédition ou un centre logistique contient dans sa mémoire centrale (16) les positions réelles et les situations réelles pour tous les châssis (4) placés sur ses terrains (15),
■ le premier dispositif d'introduction (10) destiné à lire la position réelle et la situation réelle du châssis (4) à recevoir peut être relié à la mémoire centrale (16) pour le transfert des données.

5. Système de commande selon l'une quelconque des revendications 2 à 4, **caractérisé en ce que** des informations sur la qualité du chargement sont en outre enregistrées dans la mémoire du châssis (12).

6. Système de commande selon l'une quelconque des revendications 2 à 5, **caractérisé en ce que** le calculateur de trajectoire (8) calcule la situation réelle et la position réelle du châssis (4), lors du positionnement du châssis (4), à partir de la position réelle et de la situation réelle de la remorque (3) et les enregistre dans la mémoire centrale (12).

7. Système de commande selon l'une quelconque des revendications 1 à 6, **caractérisé en ce que**
■ le second dispositif d'introduction (11) comporte un dispositif de navigation par satellite (18) et au moins une boussole (19) lisible et détermine à l'aide de celle-ci la position réelle et la situation réelle de la remorque (3), et/ou
■ une entreprise d'expédition ou un centre logistique comporte un dispositif de détermination de position et de situation (17), qui détermine les valeurs réelles pour la position et la situation du véhicule à traction (2) et/ou de la remorque (3) et peut être relié par câble ou non pour le transfert des données au second dispositif d'introduction (11).

8. Système de commande selon l'une quelconque des revendications 1 à 7, **caractérisé en ce que** le second dispositif d'introduction (11) comporte un capteur d'angle du timon (21) et/ou un capteur d'angle de brisure (20) et avec l'aide duquel la position réelle et la situation réelle de la remorque (3) est déterminée.

9. Système de commande selon l'une quelconque des revendications 1 à 8, **caractérisé en ce que** la remorque (3) est conçue comme semi-remorque ou comme remorque (3) articulée avec un timon dirigeable (24) ou comme remorque (3) reliée à un timon rigide.

10. Système de commande selon l'une quelconque des revendications 1 à 9, **caractérisé en ce que**
■ la trajectoire (6) se compose d'une séquence de vecteurs de mouvement (BV), lesquels comportent respectivement au moins un ordre de direction pour une installation de direction (33) du véhicule à traction (2),
■ le calculateur de trajectoire (8) calcule les ordres de direction de sorte que la remorque (3) passe sous le châssis (4) en marche arrière et lors du suivi des ordres de direction.

11. Système de commande selon la revendication 10, **caractérisé en ce qu'**un dispositif d'affichage (34) est prévu dans le cockpit (42) du véhicule à traction (2), lequel affiche au conducteur du véhicule les ordres de direction de façon optique et/ou acoustique.

12. Système de commande selon la revendication 10 ou 11, **caractérisé en ce que**
■ le véhicule à traction (2) comporte une armoire de commande (35) pilotable électroniquement, laquelle comprend au moins un système de direction (33) actionnable électroniquement,
■ un système de commande (39) est prévu, lequel génère des signaux de commande (SS) du côté de la sortie à partir des vecteurs de mouvement (BV) du côté de l'entrée et ainsi pilote l'armoire de commande (35), de sorte qu'en cas de marche arrière pour recevoir le châssis (4), le système de direction (33) suit automatiquement les ordres de direction.

13. Système de commande selon la revendication 12, **caractérisé en ce que**
■ l'armoire de commande (35) comprend en outre un système de freinage (36) actionnable électriquement ainsi qu'un agrégat de commande (37) actionnable électriquement,
■ le vecteur de mouvement (BV) comporte en outre des ordres de freinage et des ordres d'accélération et/ou de vitesse,
■ les signaux de commande (SS) du système de commande (39) pilotent l'armoire de commande (35), de sorte que celle-ci exécute la marche arrière automatiquement pour recevoir le châssis (4).

14. Système de commande selon l'une quelconque des revendications 1 à 13, **caractérisé en ce que** la remorque (3) est pourvue d'un détecteur de distance (40), lequel détermine les valeurs de distance lors du rapprochement de la remorque (3) au niveau du châssis (4), qui peuvent être utilisées par le calculateur de trajectoire (8) pour corriger la trajectoire (6) et/ou qui sont prises en compte par le système de commande (39) et/ou par le calculateur de trajectoire (8), de sorte que le système de commande (39) et/ou le calculateur de trajectoire (8) génère un ordre de freinage prioritaire en cas de danger de collision imminent.
